(19) **Europäisches Patentamt European Patent Office Office européen des brevets**

(11) **EP 3 111 247 B1**

(12) **FASCICULE DE BREVET EUROPEEN**

(45) Date de publication et mention de la délivrance du brevet:
**17.06.2020 Bulletin 2020/25**

(21) Numéro de dépôt: **15708768.5**

(22) Date de dépôt: **25.02.2015**

(51) Int Cl.:
*G01S 7/02* (2006.01)    *G01S 3/46* (2006.01)

(86) Numéro de dépôt international:
**PCT/EP2015/053892**

(87) Numéro de publication internationale:
**WO 2015/128351 (03.09.2015 Gazette 2015/35)**

(54) **DISPOSITIF RADAR APTE A EQUIPER UN SYSTEME DE SURVEILLANCE COTIERE, ET SYSTEME DE SURVEILLANCE COTIERE INTEGRANT UN TEL DISPOSITIF**

ZUR AUSRÜSTUNG EINES KÜSTENÜBERWACHUNGSSYSTEMS GEEIGNETE RADARVORRICHTUNG UND KÜSTENÜBERWACHUNGSSYSTEM MIT SOLCH EINER VORRICHTUNG

RADAR DEVICE SUITABLE FOR EQUIPPING A COASTAL MONITORING SYSTEM, AND COASTAL MONITORING SYSTEM INCORPORATING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2014 FR 1400514**

(43) Date de publication de la demande:
**04.01.2017 Bulletin 2017/01**

(73) Titulaire: **THALES
92400 Courbevoie (FR)**

(72) Inventeurs:
• **CORNIC, Pascal
F-29820 Guilers (FR)**
• **AUDIC, Yves
F-29238 Brest Cedex 3 (FR)**
• **LE BIHAN, Patrick
F-29870 Lannilis (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
EP-A1- 0 508 866    WO-A1-2013/141712
US-A- 5 381 150    US-A1- 2003 063 695

**Description**

La présente invention concerne un dispositif radar apte à équiper un système de surveillance côtière. Elle concerne également un système de surveillance côtière intégrant un tel dispositif.

L'invention s'applique notamment dans le domaine de la surveillance côtière où l'on cherche non seulement à détecter, à localiser et à identifier tous types de navires à partir de la côte, mais aussi à analyser le trafic et détecter d'éventuels comportements suspects.

Les stations de surveillance côtière, pour la sécurisation des approches maritimes et la surveillance du trafic, utilisent des systèmes de détection et de poursuite à base de radars et de systèmes d'interception de type AIS et des chaînes de goniométrie pour la détection, la localisation et l'identification de plateformes navales. Leur capacité est limitée aux performances physiques de ces équipements et à la volonté de discrétion des cibles, ce qui induit des incertitudes et des difficultés de gestion des trafics.

Par exemple, la sensibilité d'un radar peut s'avérer insuffisante pour détecter de petites embarcations, en particulier par mer forte, celles-ci se confondant avec le fouillis de mer ou pouvant être masquées par les vagues. De même, à grande distance, et selon la hauteur d'installation du radar de surveillance côtière, un partie importante du navire peut disparaître sous l'horizon, ce qui tend à réduire de façon importante sa surface équivalente radar, empêchant de ce fait sa détection.

Par ailleurs le système d'identification automatique, encore appelé AIS, a une portée limitée :

- Pour les navires de fort tonnage, comme les cargos ou les navires de la marine marchande, les équipements AIS dits de classe A, ont une portée maximum de 20 Nm ;
- Pour les bateaux de pêche de moins de 15 mètres ou les bateaux de loisir, les équipements AIS dits de classe B ont une portée de 5 à 10 Nm, selon le type et le fournisseur.

De plus, tous les navires ne sont pas équipés d'AIS et certains le neutralisent dans une volonté de discrétion. L'AIS peut même être brouillé volontairement. Cela entraîne des risques de collision ou de non détection d'embarcations malveillantes ou non.

Il faut noter également que les équipements actuels de type ESM, au niveau de l'état de l'art pour la détection, la classification et l'identification de navires par l'interception de leur émission radar représentent un investissement trop important pour être généralisé. De plus, la prolifération à venir des radars de navigation à technologie état solide et à faible puissance crête limite l'efficacité de l'utilisation de ces équipements traditionnels vis-à-vis de ce type de radars.

Un document US 20030633695 divulgue un récepteur adaptatif pour déterminer les paramètres d'un signal entrant.

Un document WO 2013/141712 A1 divulgue un procédé pour observer et enregistrer l'idendité, la position et le mouvement d'un ou plusieurs navires dans des eaux spécifiques ou une voie de navigation.

Un but de l'invention est notamment de pallier les inconvénients précités, en permettant la réalisation d'un système de surveillance côtière à très haute sensibilité. A cet effet, l'invention a pour objet un dispositif radar apte à équiper un système de surveillance côtière, ledit dispositif comportant au moins :

- une antenne fonctionnant dans la polarisation des radars de navigation maritime et comprenant au moins trois voies de réception dans le plan horizontal,
- pour chaque voie, un récepteur dont la bande passante est accordable dans le domaine de fréquence desdits radar de navigation maritime ;
- une unité de traitement réalisant simultanément plusieurs détections adaptées chacune à un type de signal reçu.

L'unité de traitement effectue une comparaison de paramètres des signaux radar détectés avec des paramètres normés encadrant la définition de radars de navigation maritime afin d'en déduire la nature des navires équipés des radars émettant lesdits signaux.

Dans un mode de réalisation, l'unité de traitement réalise simultanément une détection adaptée à des signaux radars impulsionnels et une détection adaptés à des signaux radar de faible puissance crête, et réalisant la localisation angulaire des radars émettant les signaux détectés.

La détection des signaux radar est par exemple effectuée selon plusieurs étages successifs de filtrage fréquentiel montés en cascade, correspondant aux différentes bandes de fréquences possibles propres aux radars de navigation maritime.

La détection des signaux radars impulsionnels est par exemple effectuée par détection quadratique. La détection des signaux radars de faible puissance crête est par exemple effectuée par autocorrélation des signaux reçus sur une même voie. La détection des signaux radars de faible puissance crête peut aussi être effectuée par inter corrélation des signaux reçus sur différentes voies de réception.

L'antenne est par exemple une antenne réseau de type interférométrique en azimut. Dans un autre mode de réalisation possible, l'antenne est une antenne réseau de type monopulse.

L'antenne peut-être positionnée sur un axe rotatif vertical de façon à couvrir par rotation continue un domaine angulaire déterminé dans le plan horizontal.

Dans un autre mode de réalisation possible, l'antenne est positionnée sur un axe rotatif vertical de façon à couvrir par positions angulaires successives fixes et alternées un domaine angulaire déterminé dans le plan horizontal.

L'antenne est par exemple composée de quatre réseaux antennaires plans comprenant chacun au moins trois sous-réseaux, un seul sous-réseau de chaque réseau étant connecté au récepteur à un instant donné, les autres sous-réseaux étant connectés successivement.

Dans un autre mode de réalisation possible, l'antenne est composée de quatre réseaux antennaires plans comprenant chacun au moins trois sous-réseaux, seuls les quatre sous-réseaux d'un même panneau antennaire étant connectés au récepteur à un instant donné, les sous-réseaux des autres panneaux étant successivement connectés au récepteur.

Avantageusement, le dispositif est par exemple apte à coopérer avec d'autres moyens de détection, lesdits autres moyens étant du type radars et/ou de type AIS.

L'invention a également pour objet un système de surveillance côtière comportant un dispositif tel que décrit précédemment.

Dans un mode de réalisation possible, ce système comporte d'autres moyens de détection, lesdits moyens étant de type radars et/ou de type AIS. Les paramètres des signaux détectés par ledit dispositif sont par exemple fusionnés avec les informations recueillies par lesdits autres moyens afin d'améliorer la classification des navires ou d'en assurer l'identification. Lesdites informations recueillies sont par exemple du type « range profile » et/ou de type image ISAR.

D'autres caractéristiques et avantages de l'invention apparaîtront à l'aide de la description qui suit faite en regard de dessins annexés qui représentent :

- la figure 1, une illustration du principe selon l'invention ;
- la figure 2, une présentation des composants d'un dispositif selon l'invention ;
- la figure 3, un premier exemple d'antenne utilisée dans un dispositif selon l'invention ;
- les figures 4a et 4b, deux autres exemples d'antennes pouvant être utilisées dans un dispositif selon l'invention ;
- la figure 5, un autre exemple d'antenne susceptible d'être utilisée dans un dispositif selon l'invention ;
- la figure 6, une présentation des étapes possibles mises en œuvre par l'unité de traitement d'un dispositif selon l'invention ;
- la figure 7, un exemple de séparation fréquentielle et de détection des signaux reçus effectué par l'unité de traitement précitée ;
- la figure 8, un exemple d'estimation de la direction d'arrivée des signaux reçus effectué par l'unité de traitement précitée.

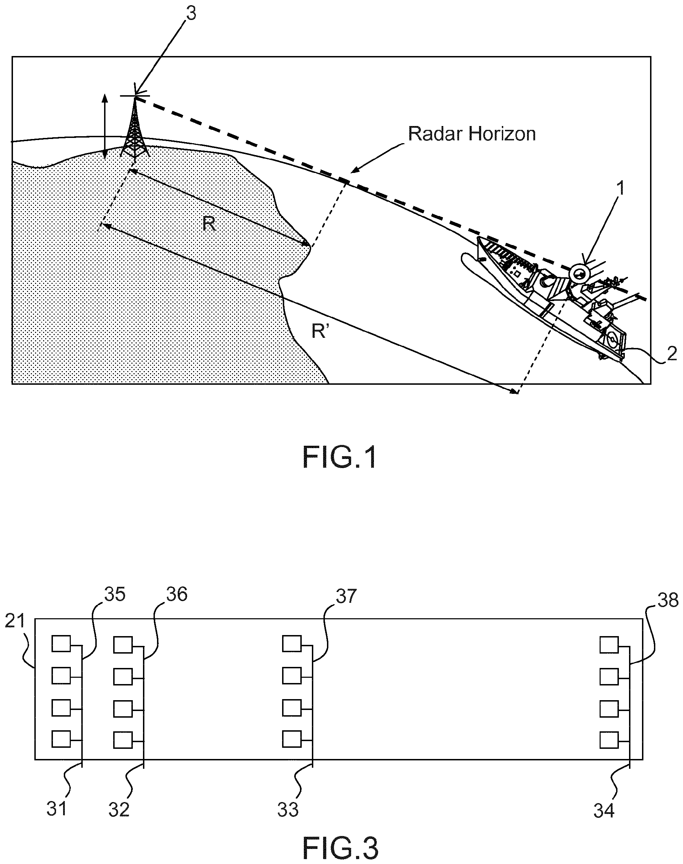

La figure 1 illustre le principe de l'invention. Un dispositif selon l'invention détecte les émissions des radars de bords 1 qui sont positionnés sur un point haut des bateaux 2, souvent en tête de mat. Cela garantit avantageusement pour un radar de surveillance situé à une hauteur H, une visibilité au-dessus de l'horizon à distance R' plus lointaine que la distance R obtenue par un radar de station de surveillance côtière classique percevant la surface équivalente radar des bateaux à une hauteur plus faible, comme le montre la figure 1.

Un objet de l'invention est donc un dispositif de surveillance côtière à très haute sensibilité, basé sur la détection passive des radars de navigation des navires, quel que soit leur type, y compris les radars à faible puissance crête, dits LPI. Un dispositif selon l'invention permet ainsi de renforcer les capacités de surveillance côtière des stations conventionnelles.

Comme les autres équipements constituant une station côtière, il est apte à être positionné en bordure de mer sur un point élevé 3 pour bénéficier d'une distance à l'horizon la plus grande possible. Combiné avec les autres moyens de géolocalisation comme le radar de réception AIS, un dispositif selon l'invention apporte un gain de robustesse et de redondance en matière de surveillance du trafic maritime et offre de nouvelles possibilités de classification et d'identification de navires, ainsi que de nouvelles capacités de détection des comportements anormaux.

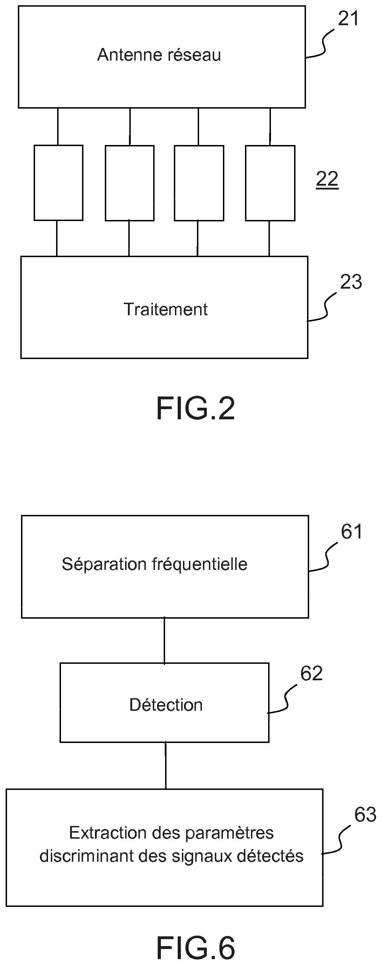

La figure 2 illustre de façon schématique les composants d'un dispositif selon l'invention. Un dispositif selon l'invention détecte les ondes émises par les radars maritimes, capable de détecter simultanément des radars à impulsions de forte puissance crête, typiquement plusieurs kilowatts, et des radars à ondes continues ou quasi continues à très faible puissance crête, typiquement quelques milliwatts à un watt. Le dispositif comporte au moins :

- une antenne réseau directive 21 comprenant au moins trois voies de réception en polarisation rectiligne horizontale, correspondant à la polarisation des antennes des radars de navigation ;
- pour chaque voie, un récepteur hétérodyne 22, voire superhétérodyne, dont la bande passante est accordable et limitée au domaine de fréquence des radars de navigation, de façon préférentielle entre 9,3 et 9,5 GHz, mais pas uniquement ;
- une unité 23 de traitement de détection réalisant simultanément la détection des signaux radars impulsionnels et de type LPI, le type de traitement étant fonction de la nature des signaux reçus.

Ainsi, un dispositif selon l'invention reçoit à l'aide de l'antenne directive multivoies les signaux issus des radars de navigation, transpose ces signaux en fréquence puis les code dans un récepteur hétérodyne ou superhétérodyne 22 à haute dynamique et à faible facteur de bruit. Enfin, ces signaux sont traités 23 dans un calculateur, par exemple dédié, afin d'en extraire les caractéristiques principales et la direction d'arrivée, le traitement étant différencié selon la nature des signaux, impulsionnels ou LPI.

La figure 3 illustre un mode de réalisation possible de l'antenne 21, représentée dans un plan vertical. Cette dernière fonctionne par exemple en polarisation horizontale, ce qui correspond à la polarisation des radars de navigation maritime.

Dans cet exemple de réalisation, l'antenne 21 comporte quatre voies de réception 31, 32, 33, 34 répartis sur sa longueur L. Cette longueur L est par exemple de quelques dizaines de centimètres, typiquement 50 cm, pour permettre par mesure de phase l'estimation de la direction d'arrivée avec une grande précision, typiquement meilleure que 1°. Son faisceau est pincé en élévation de façon à éclairer la surface de la mer sur une distance étendue. A cet effet, l'ouverture est par exemple de l'ordre de 20°. De façon préférentielle, l'antenne présente un diagramme plus étroit et co-sécanté en élévation de façon à optimiser simultanément son gain et sa couverture sur la surface de la mer. L'antenne peut avantageusement être réalisée en circuit imprimé afin de réduire son coût de réalisation.

L'antenne 21 est par exemple de type interférométrique, c'est-à-dire composée de plusieurs sous-réseaux 35, 36, 37, 38 directif dans le plan vertical et d'ouverture large, typiquement 90° dans le plan horizontal, ces sous-réseaux étant répartis de façon non uniforme sur la longueur de l'antenne comme le montre la figure 3.

Un tel réseau présente une ouverture angulaire instantanée de l'ordre de 90° dans le plan horizontal. Afin d'augmenter la couverture angulaire dans le plan horizontal, potentiellement jusqu'à 360°, cette antenne 21 peut être installée sur un système mécanique apte à se mouvoir en rotation, permettant une couverture angulaire complète par balayage mécanique sectoriel. Dans ce cas, l'antenne est positionnée immobile successivement dans plusieurs directions de pointage, de façon à couvrir au cours d'une même séquence temporelle l'ensemble du domaine de surveillance, cette séquence temporelle étant programmée selon la configuration du lieu d'implantation du système.

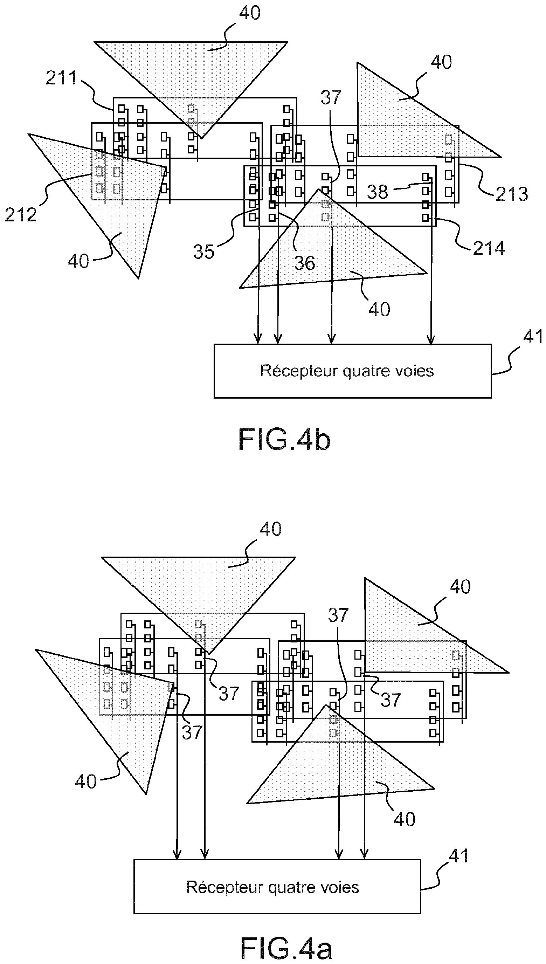

L'augmentation du domaine angulaire peut également être obtenue par la juxtaposition de plusieurs panneaux, du type de celui de la figure 3, orientés dans des directions différentes, ces panneaux étant associés chacun à un récepteur, ou bien commutés séquentiellement sur un même récepteur. Dans ce dernier cas, toujours dans une solution à quatre voies de réception, il est possible de couvrir 360° en reliant, par l'intermédiaire d'une matrice de commutation, quatre antennes 21 à quatre voies à un récepteur unique comportant lui-même quatre voies, avec deux états possibles de fonctionnement. Les figures 4a et 4b illustrent ces deux états possibles de fonctionnement avec quatre panneaux antennaires du type de l'antenne 21 de la figure 3.

La figure 4a présente un mode veille sur 360°. Dans cette configuration, sur chaque panneau antennaire 211, 212, 213, 214 un sous-réseau 37 sur quatre est connecté au récepteur quatre voies 41 à un instant donné, les autres sous-réseaux 35, 36, 38 étant successivement commutés un par un sur ce récepteur 41. Les quatre ouvertures angulaires 40 couvrent l'ensemble du secteur 360°.

La figure 4b, présente un mode dit DOA. Dans cette configuration, seuls les quatre sous-réseaux 35, 36, 37, 38 d'un même panneau antennaire 214 sont connectés au récepteur 41 à un instant donné. Les quatre sous-réseaux des autres panneaux sont séquentiellement connectés au récepteur 41.

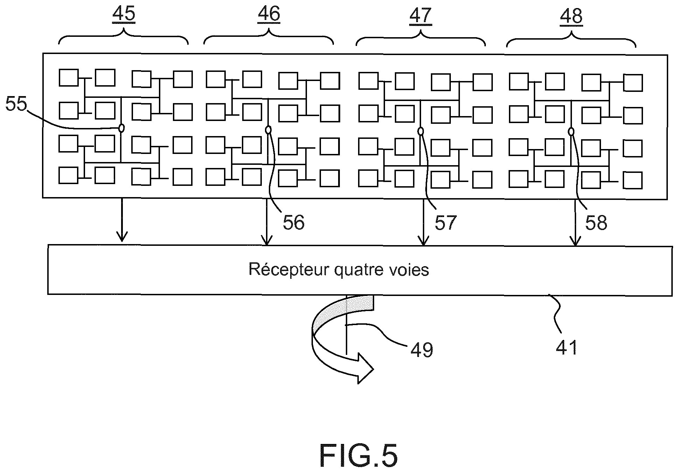

La figure 5 présente un autre exemple de réalisation possible de l'antenne 21. Dans cet exemple, l'antenne est de type monopulse de phase. Elle est composée de plusieurs sous-réseaux directifs 45, 46, 47, 48, dans le plan vertical et dans le plan horizontal de même ouverture angulaire. Ces sous-réseaux, ayant chacun un point centre d'alimentation 55, 56, 57, 58, sont adjacents et répartis de façon uniforme sur la longueur de l'antenne. Dans l'exemple de la figure 5, l'antenne comporte quatre sous-réseaux d'ouverture angulaire égale à 20° par 20°. Dans le mode de réalisation de la figure 5, l'antenne est placée en rotation autour d'un axe vertical 49 de façon à couvrir un secteur angulaire donné, pouvant atteindre 360°. La rotation peut être continue ou non, selon un sens de rotation unique ou selon un sens de rotation alterné.

Le récepteur 41 utilisé en sortie de l'antenne 21, quel que soit le mode de réalisation de cette dernière, peut être réalisé classiquement. Il peut être superhétérodyne, c'est-à-dire comportant deux étages de fréquence intermédiaire, effectuant deux transpositions de fréquence. Le récepteur peut être intégré au dos de l'antenne de façon à minimiser les pertes dans les liaisons hyperfréquence. Son domaine de fonctionnement est accordable en fréquence dans la bande des radars de navigation.

Le récepteur comporte par exemple les fonctionnalités suivantes :

- Limitation et amplification faible bruit ;
- Filtrage, amplification et transposition en fréquence en première fréquence intermédiaire à l'aide d'un premier oscillateur local commandé en fréquence ;
- Filtrage, par exemple dans une bande passante de 100 MHz, amplification et transposition en deuxième fréquence intermédiaire à l'aide d'un deuxième oscillateur local à fréquence fixe ;
- Atténuation programmable des voies de réception, par exemple sur une dynamique de 50 dB ;
- Codage numérique, par exemple sur 12 bits, à 500 MHz ;
- Mise en forme et transposition des données vers le calculateur de traitement 23 via une liaison série à très haut débit, par exemple en technologie à fibre optique.

La figure 6 présente les différentes étapes possibles effectuées par l'unité de traitement 23 en sortie du récepteur. Le traitement s'effectue sur les signaux numérisés en sortie du récepteur, pour chacune des différentes voies antennaires. A cet effet, l'unité 23 comporte par exemple un calculateur PC équipé d'une carte de traitement du signal à base FPGA.

Le traitement comporte une première étape 61 ayant pour but de séparer les signaux reçus, en effectuant par exemple une séparation fréquentielle des signaux par filtrage numérique appliquée sur chaque voie antennaire. Avant l'étape suivante de détection 62, cette opération vise notamment à optimiser le rapport signal sur bruit, à isoler les uns des autres les différents signaux présents dans l'environnement pour en faciliter la détection et éliminer les intermodulations qui peuvent être sources de fausses détections et enfin à permettre une estimation de la fréquence des différents signaux présents.

L'étape suivante 62 comporte au moins deux traitements en parallèle. Plus particulièrement, le dispositif selon l'invention effectue la détection à l'aide d'au moins deux traitements spécifiques et simultanés des signaux radars de navigation maritime, et l'estimation des directions d'arrivée de ces signaux. Un premier traitement est adapté aux signaux impulsionnels et un deuxième traitement est adapté aux signaux émis par les radars LPI.

Dans une dernière étape 63, le dispositif effectue l'extraction des paramètres discriminants des signaux détectés.

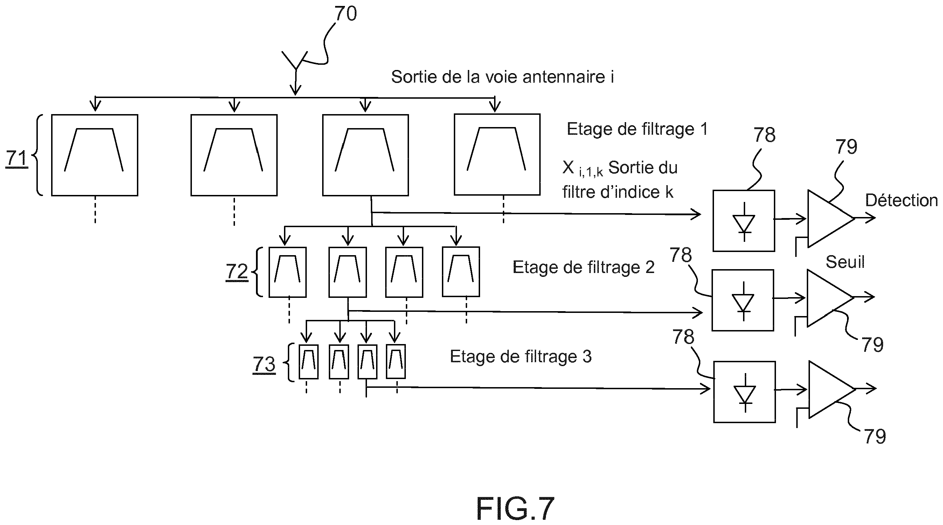

La figure 7 illustre une mise en œuvre possible pour la séparation fréquentielle des signaux. Ce premier traitement est effectué, en sortie de chaque voie antennaire 70, sur plusieurs étages successifs de filtrage 71, 72, 73 montés en cascade qui effectuent la décomposition de la bande de réception totale $\Delta F$ en sous-bandes de plus en plus étroites au fil des étages. Une telle décomposition est notamment décrite dans la demande de brevet FR 1301719. La figure 7 illustre la séparation fréquentielle en sortie de la voie d'ordre i. A chaque étage d'ordre j correspond $2N_j$ filtres adjacents de largeur de bande $\Delta F/2N_j$ correspondant à une fenêtre d'analyse temporelle de longueur $2N_j/\Delta F$. Dans l'exemple de la figure 7, $N_j$ est respectivement égal à 2, 8 et 32 pour les premier, deuxième et troisième étages, chaque filtre d'un étage étant relié en sortie à quatre filtres adjacents de l'étage suivant.

Ainsi pour la voie antennaire d'ordre i, le premier étage 71 comporte quatre filtres de largeur $\Delta F/4$, le deuxième étage 72 comporte 16 filtres de largeur $\Delta F/16$ et le troisième étage 73 comporte 64 filtres de largeur $\Delta F/64$. Il serait possible de prévoir plus ou moins d'étages.

On part d'une largeur de bande $\Delta F$ suffisamment grande pour englober toutes les fréquences possibles issues des radars de navigation maritime. On utilise par ailleurs trois étages pour obtenir trois largeurs de bande différentes $\Delta F/4$, $\Delta F/16$, $\Delta F/64$ afin de couvrir un maximum de cas, l'apparition d'un cas n'étant pas connus a priori. En d'autres termes, une solution du type de la figure 7 permet d'adapter la sensibilité et la capacité d'analyse intra pulse du récepteur à différentes longueurs d'impulsions et à différents types de modulation.

Les étages de filtrage sont donc dimensionnés pour s'adapter à la détection des différents types de radars de navigation dont les caractéristiques principales sont connues a priori. En pratique, un petit nombre d'étages de filtrage de bandes passantes différentes peut être suffisant pour traiter toutes les largeurs d'impulsions possibles. Comme indiqué ci-dessus, trois étages peuvent être suffisants. Par exemple, en partant d'une bande passante de réception instantanée $\Delta F = 100$ MHz, on peut choisir un traitement comprenant trois étages successifs, avec les bandes passantes suivantes :

- Pour l'étage 1 : $N_1 = 2$, bande passante $\Delta F/4 = 25$ MHz ;
- Pour l'étage 2 : $N_2 = 8$, bande passante $\Delta F/16 = 6,25$ MHz ;
- Pour l'étage 3 : $N_3 = 32$, bande passante $\Delta F/64 = 1,56$ MHz ;

Ce choix est notamment justifié par les cas de radars de navigations décrits ci-dessous.

Cas des radars à signaux impulsionnels à magnétron

Typiquement, les radars de navigation de type impulsionnel à magnétron présentent des durées d'impulsion comprises entre 80 ns et 1 $\mu$s et n'ont pas de modulation intra-pulse. La bande de fréquence couverte par ces impulsions est grossièrement égale à l'inverse de la durée d'impulsion, et s'étend donc typiquement de 1 MHz à 12,5 Mhz. Leur facteur de forme est typiquement inférieur ou égal à 1%.

Par ailleurs, ces radars sont de forte puissance crête, typiquement supérieure à 2 kilowatt, et il n'est pas nécessaire d'ajuster rigoureusement la largeur des filtres de réception aux différentes durées d'impulsions pour obtenir la sensibilité nécessaire pour la détection.

Cas des radars à signaux impulsionnels à amplificateur état solide à compression d'impulsion

Ces radars génèrent des impulsions modulées en fréquence, sous forme de modulation linéaire encore appelée « chirp », leur puissance crête est plus faible que celle des radars à magnétron, typiquement de l'ordre de 200 watt crête, et leur facteur de forme est typiquement supérieur à 10%.

Par ailleurs, la pente maximum de modulation du chirp est typiquement de l'ordre de 100 MHz en 50 $\mu$s.

Pour ce type de radar dont la fréquence varie dans l'impulsion, les filtres les mieux adaptés sont ceux dont la bande passante $\Delta F/2N_j$ est supérieure ou égale à la plage de variation totale de fréquence du signal pendant le temps d'intégration de ces filtres, dont la valeur est typiquement $2N_j/\Delta F$.

Pour un signal de type « chirp » ceci peut s'écrire : $$\frac{\Delta F}{2Nj} \geq \sqrt{p},$$ où $p$ est la pente du « chirp »

Par exemple, si l'on considère un signal impulsionnel de durée 50 µs présentant une modulation « chirp » de pente $p$ =100 MHz par 50 µs, les bandes passantes $\Delta F/2Nj$ les mieux adaptées à la détection sont supérieures ou égales à 1,4 MHz.

Ici encore les radars considérés sont de forte puissance crête, typiquement de l'ordre de 200 watts, et il n'est pas nécessaire d'ajuster rigoureusement la largeur des filtres de réception à la pente des chirp pour obtenir la sensibilité nécessaire à la détection.

Cas des radars LPI

Ces radars présentent des puissances crête faibles, typiquement de l'ordre de 1 milliwatt à 1 watt, et se distinguent par des « impulsions » modulées très longues, typiquement de l'ordre d'une milliseconde, et par des facteurs de forme très élevés, typiquement compris entre 25% et 100%

Les modulations intra pulse, quelles que soient leurs types, continues ou codées, en phase ou en fréquence, s'apparentent à des lois d'évolution de phase quadratique, ou ce qui est équivalent, d'évolution de fréquence linéaire.

Par ailleurs, la bande de modulation équivalente maximum est typiquement de l'ordre de 100 MHz en une milliseconde.

La détection de ce type de radar nécessite non seulement une chaine de réception à haute sensibilité, mais aussi un traitement d'intégration sur un temps long, typiquement de l'ordre de 100 µs, effectué après la première étape de séparation fréquentielle.

Pour ce type de radar dont la fréquence varie dans l'impulsion, les filtres les mieux adaptés sont ceux dont la bande passante $\Delta F/2N_j$ est supérieure à la variation totale de fréquence du signal pendant le temps de traitement nécessaire à la détection.

Par exemple, si l'on considère un signal impulsionnel de durée 1 ms présentant une bande de modulation de 100 MHz et un temps d'intégration nécessaire à la détection de 100 µs, la bande passante de l'étage de filtrage utilisé doit être supérieure à 10 MHz, correspondant à l'étage 1 dans l'exemple ci-dessus.

Une fois l'étape 61 de séparation des signaux effectuée, le dispositif effectue l'étape 62 de détection. En sortie de chaque étage, et pour chaque filtre, les signaux sont à cet effet orientés vers un dispositif de détection visant à extraire les différents signaux présents. La détection s'effectue en sortie des étages de filtrage, de façon simultanée et différentiée.

Comme le montre la figure 7, la détection des radars à signaux impulsionnels peut s'effectuer par détection quadratique en sortie des différents étages de filtrage 71, 72,73 et pour chaque filtre de chacune des voies de réception. Plus particulièrement dans ce cas, le dispositif de détection effectue par une détection quadratique 78, en calculant la norme du signal au carré, puis en comparant 79 le résultat à un seuil, une détection étant obtenue lorsque ce seuil est dépassé. Dans l'exemple de la figure 7, le signal $X_{i, j, k}$ en sortie du filtre d'ordre k sur l'étage j, pour la voie antenne i, est traité de cette manière. Ce signal est un signal complexe dont la valeur quadratique est égale à $I^2 + Q^2$, I et Q étant ses composantes réelle et imaginaire.

Ainsi, quelles que soient les caractéristiques de la fréquence porteuse, de la modulation de fréquence et de l'enveloppe des impulsions à détecter dans la bande de réception, il existe au moins une voie de réception adaptée à la détection du signal.

La détection des radars LPI s'effectue par un autre type de traitement, soit par autocorrélation du signal reçu sur chaque voie de réception, soit par inter corrélation des signaux reçus sur les différentes voies antennaires de l'antenne, prises deux à deux, conformément par exemple à ce qui est décrit dans la demande de brevet FR 1301719 précitée, concernant un dispositif de détection de signaux électromagnétiques.

Cette opération de corrélation s'effectue sur un temps long, typiquement de 100 µs et s'effectue après un premier filtrage séquentiel. La bande passante des filtres choisis pour effectuer la corrélation doit tenir compte des pentes de modulation de fréquence maximum qui sont typiquement de 100 MHz par milliseconde, ce qui correspond à une migration en fréquence de 10 MHz en 100 µs. Ainsi la bande passante de ces filtres ne doit pas être inférieure à la migration en fréquence pendant le temps de corrélation, soit typiquement 10 MHz, pour ne pas dégrader le rapport signal à bruit. Dans l'exemple de dimensionnement des étages de filtrage précédent, le traitement peut être effectué en sortie du premier étage de filtrage 71, soit l'étage 1 où $\Delta F/4$ = 25 MHz.

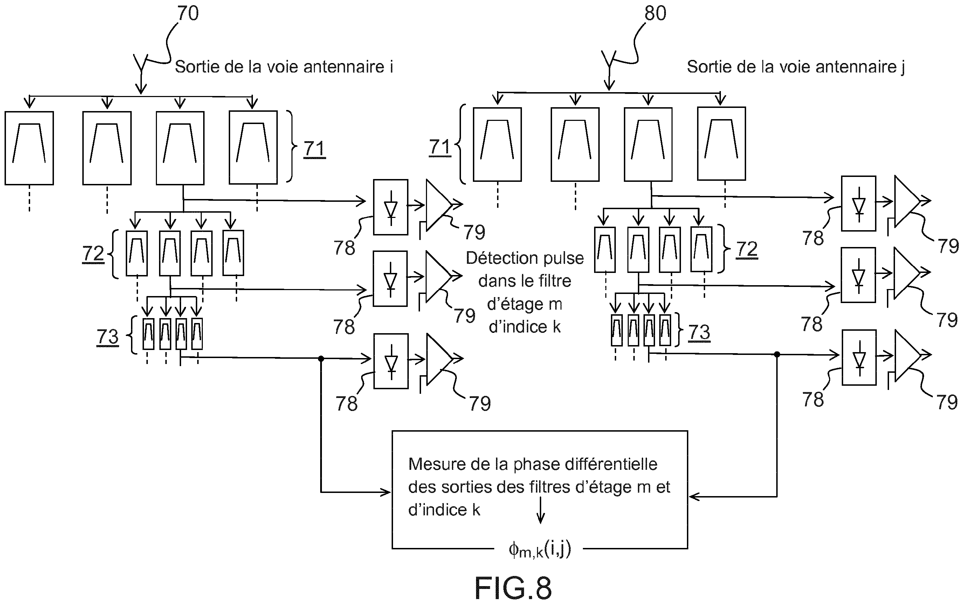

L'étape de détection 62 effectue également l'estimation de la direction d'arrivée des signaux. Dans le cas de la détection d'un radar de type impulsionnel l'estimation de la direction d'arrivée est par exemple calculée à partir de la mesure 81 des mesures de phases différentielles $\Phi_{m,k}$ (i, j) obtenues en sortie de filtres semblables ayant donné lieu à la détection sur les différentes voies antennaires 70, 80 comme l'illustre la figure 8. En particulier, cette figure montre la mesure 81 de la phase différentielles $\Phi_{m,k}$ (i, j) en sorties des filtres d'ordre k de l'étage m pour les voies antennaires i et j. Dans le cas de la détection d'un radar de type LPI, l'estimation de la direction d'arrivée des signaux peut s'effectuer conformément à la description du brevet déjà cité FR 1301719. A l'issue de l'étape d'estimation de la direction d'arrivée des signaux, on obtient la localisation angulaire des navires détectés. Il reste notamment à en déterminer la nature ou la classification.

A cet effet, à la suite des traitements de détection simultanés, et d'estimation des directions d'arrivée des signaux, le dispositif selon l'invention réalise le désentrelacement et le pistage des signaux conformément aux règles de l'art connues pour les dispositifs ESM, visant à isoler les signaux entre eux et à observer leur évolution dans le temps. Cette observation est basée sur un temps long de sorte qu'un même radar puisse être

11   EP 3 111 247 B1   12

détecté plusieurs fois afin de le caractériser.

De façon classique, les paramètres décrivant les signaux radars qui peuvent être estimés sont les suivant :

- Temps d'arrivée de l'impulsion ;
- Durée de l'impulsion ;
- Période de répétition ;
- Fréquence porteuse ;
- Caractéristique de modulation intra puise ;
- Vitesse de rotation d'antenne ;
- Ouverture d'antenne.

En plus de ces paramètres, le niveau des lobes secondaires de l'antenne et la rotation de phase d'impulsion à impulsion peuvent également être estimés. Les informations sur ces paramètres sont utilisées pour déterminer la classe des équipements radar et en déduire le type et la dimension du bateau correspondant selon la répartition proposée par les organismes de régulation, par exemple la suivante :

- SOLAS (International Convention for the **S**afety **O**f Life **A**t **S**ea): (selon la norme EN 62388, correspondant typiquement à de gros bateaux de marine marchande ou de transport de passagers)

- Non SOLAS : (selon la norme EN 62252)

  • Catégorie A : antenne d'ouverture azimut inférieure à 4° (typiquement bateau de pêche)
  • Catégorie B : antenne d'ouverture azimut inférieure à 5,5° (typiquement petit bateau de pêche ou bateau de plaisance)
  • Catégorie C : antenne d'ouverture azimut inférieure à 7,7° (typiquement bateau de plaisance)

Par ailleurs, afin d'améliorer la classification des bateaux, voire d'en assurer l'identification, ces informations peuvent être avantageusement fusionnées avec les informations recueillies par un radar de surveillance maritime, ou tout autre moyen de détection de type radar ou de type AIS, opérant sur la même zone de couverture, capable de recueillir la silhouette des navires en présence, par exemple par des traitements d'imagerie de type « Range profile » et/ou ISAR.

Un dispositif selon l'invention peut être placé sur une plate-forme terrestre, en haut d'une tour par exemple, en bord de mer. Il peut aussi être placé sur une plate-forme non terrestre, par exemple sur une plateforme maritime. Avantageusement, un dispositif selon l'invention peut être utilisé dans une station de surveillance côtière en complément de moyens conventionnels radars et AIS. Les signatures des radars obtenues par un dispositif selon l'invention, c'est-à-dire les paramètres caractéristiques des signaux détectés, peuvent avantageusement être fusionnés avec les informations recueillies par un radar de surveillance maritime afin d'améliorer la classification des navires ou d'en assurer l'identification.

**Revendications**

1. Dispositif radar apte à équiper un système de surveillance côtière **caractérisé en ce qu'**il comporte au moins :

   - une antenne (21) fonctionnant dans la polarisation des radars de navigation maritime, c'està-dire la polarisation rectiligne horizontale, et comprenant au moins trois voies de réception dans le plan horizontal,
   - pour chaque voie, un récepteur (22, 41) dont la bande passante est accordable dans le domaine de fréquence desdits radar de navigation maritime ;
   - une unité de traitement (23) réalisant simultanément plusieurs détections adaptées chacune à un type de signal reçu.

   l'unité de traitement effectuant (63) une comparaison de paramètres des signaux radar détectés avec des paramètres normés encadrant la définition de radars de navigation maritime afin d'en déduire la nature des navires équipés des radars émettant lesdits signaux.

2. Dispositif selon la revendication 1, **caractérisé en ce que** l'unité de traitement (23) réalise simultanément une détection (62) adaptée à des signaux radars impulsionnels et une détection adaptés à des signaux radar de faible puissance crête, et réalisant la localisation angulaire des radars émettant les signaux détectés.

3. Dispositif selon l'une quelconque des revendications précédentes, **caractérisé en ce que** la détection des signaux radar est effectuée selon plusieurs étages successifs de filtrage fréquentiel montés en cascade, correspondant aux différentes bandes de fréquences possibles propres aux radars de navigation maritime.

4. Dispositif selon l'une quelconque des revendications précédentes, **caractérisé en ce que** la détection des signaux radars impulsionnels est effectuée par détection quadratique (78, 79).

5. Dispositif selon l'une quelconque des revendications précédentes, **caractérisé en ce que** la détection des signaux radars de faible puissance crête est effectuée par autocorrélation des signaux reçus sur une même voie.

6. Dispositif selon l'une quelconque des revendications précédentes, **caractérisé en ce que** la détection des

7

signaux radars de faible puissance crête est effectuée par inter corrélation des signaux reçus sur différentes voies de réception.

7. Dispositif selon l'une quelconque des revendications précédentes, **caractérisé en ce que** l'antenne (21) est une antenne réseau de type interférométrique en azimut.

8. Dispositif selon la revendication 1, **caractérisé en ce que** l'antenne (21) est une antenne réseau de type monopulse.

9. Dispositif selon l'une quelconque des revendications précédentes, **caractérisé en ce que** l'antenne (23) est positionnée sur un axe rotatif vertical (49) de façon à couvrir par rotation continue un domaine angulaire déterminé dans le plan horizontal.

10. Dispositif selon l'une quelconque des revendications 1 à 8, **caractérisé en ce que** l'antenne (23) est positionnée sur un axe rotatif vertical (49) de façon à couvrir par positions angulaires successives fixes et alternées un domaine angulaire déterminé dans le plan horizontal.

11. Dispositif selon l'une quelconque des revendications 1 à 8, **caractérisé en ce que** l'antenne est composée de quatre réseaux antennaires plans (211, 212, 213, 214) comprenant chacun au moins trois sous-réseaux (35, 36, 37, 38), un seul sous-réseau (37) de chaque réseau étant connecté au récepteur (41) à un instant donné, les autres sous-réseaux (36, 37, 38) étant connectés successivement.

12. Dispositif selon l'une quelconque des revendications 1 à 8, **caractérisé en ce que** l'antenne est composée de quatre réseaux antennaires plans (211, 212, 213, 214) comprenant chacun au moins trois sous-réseaux (35, 36, 37, 38), seuls les quatre sous-réseaux (35, 36, 37, 38) d'un même panneau antennaire (214) étant connectés au récepteur (41) à un instant donné, les sous-réseaux des autres panneaux étant successivement connectés au récepteur (41).

13. Dispositif selon l'une quelconque des revendications précédentes, **caractérisé en ce qu'**il est apte à coopérer avec d'autres moyens de détection, lesdits autres moyens étant du type radars et/ou de type AIS.

14. Système de surveillance côtière, **caractérisé en ce qu'**il comporte un dispositif selon l'une quelconque des revendications précédentes.

15. Système selon la revendication 14, **caractérisé en ce qu'**il comporte d'autres moyens de détection, lesdits autres moyens étant de type radars et/ou de type AIS.

16. Système selon la revendication 15, **caractérisé en ce que** les paramètres des signaux détectés par ledit dispositif sont fusionnés avec les informations recueillies par lesdits autres moyens afin d'améliorer la classification des navires ou d'en assurer l'identification.

17. Système selon la revendication 16, **caractérisé en ce que** lesdites informations recueillies sont du type « range profile » et/ou de type image ISAR.

**Patentansprüche**

1. Zur Ausrüstung eines Küstenüberwachungssystems geeignete Radarvorrichtung, **dadurch gekennzeichnet, dass** sie mindestens Folgendes beinhaltet:

   - eine Antenne (21), welche in der Polarisation der Hochseenavigation arbeitet, d. h. in der geradlinigen, horizontalen Polarisation, und welches mindestens drei Empfangskanäle in der horizontalen Ebene beinhaltet,
   - für jeden Kanal, einen Empfänger (22, 41), dessen Passband in dem Frequenzbereich der Hochseenavigationsradare abstimmbar ist;
   - eine Verarbeitungseinheit (23), welche gleichzeitig mehrere Erkennungen durchführt, welche jeweils für eine Art von empfangenem Signal geeignet sind.

   wobei die Verarbeitungseinheit (63) einen Vergleich von Parametern der erkannten Radarsignale mit genormten Parametern durchführt, welche die Definition von Hochseenavigationsradaren bestimmen, um hiervon die Art der mit den Radaren ausgerüsteten Schiffen abzuleiten, welche die Signale aussenden.

2. Vorrichtung nach Anspruch 1, **dadurch gekennzeichnet, dass** die Verarbeitungseinheit (23) gleichzeitig eine Erkennung (62) durchführt, welche für Impuls-Radarsignale geeignet ist und eine Erkennung, welche für Radarsignale mit geringer Spitzenleistung geeignet ist, und die Winkelortung der die erkannten Signale aussendenden Radare durchführt.

3. Vorrichtung nach einem der vorhergehenden Ansprüche, **dadurch gekennzeichnet, dass** die Erkennung der Radarsignale in mehreren aufeinanderfolgenden, in Kaskade montierten Frequenz-Filterstufen erfolgt, welche den unterschiedlichen möglichen Frequenzbändern entsprechen, welche den Hochseenavigationsradaren zugehören.

**4.** Vorrichtung nach einem der vorhergehenden Ansprüche, **dadurch gekennzeichnet, dass** die Erkennung der Impuls-Radarsignale anhand von quadratischer Erkennung (78, 79) erfolgt.

**5.** Vorrichtung nach einem der vorhergehenden Ansprüche, **dadurch gekennzeichnet, dass** die Erkennung der Radarsignale mit geringer Spitzenleistung anhand einer Autokorrelation der auf demselben Kanal empfangenen Signale erfolgt.

**6.** Vorrichtung nach einem der vorhergehenden Ansprüche, **dadurch gekennzeichnet, dass** die Erkennung der Radarsignale mit geringer Spitzenleistung anhand einer Kreuzkorrelation der auf unterschiedlichen Empfangskanälen empfangenen Signale erfolgt.

**7.** Vorrichtung nach einem der vorhergehenden Ansprüche, **dadurch gekennzeichnet, dass** die Antenne (21) eine Netzwerkantenne vom Typ Azimuth-Interferometer ist.

**8.** Vorrichtung nach Anspruch 1, **dadurch gekennzeichnet, dass** die Antenne (21) eine Netzwerkantenne vom Typ Monopulsantenne ist.

**9.** Vorrichtung nach einem der vorhergehenden Ansprüche, **dadurch gekennzeichnet, dass** die Antenne (23) auf einer vertikalen Drehachse (49) in einer Weise positioniert ist, dass sie durch kontinuierliche Drehung einen bestimmten Winkelbereich in der horizontalen Ebene abdeckt.

**10.** Vorrichtung nach einem der Ansprüche 1 bis 8, **dadurch gekennzeichnet, dass** die Antenne (23) auf einer vertikalen Drehachse (49) in einer Weise positioniert ist, dass sie durch aufeinanderfolgende, feste und abwechselnde Winkelpositionen einen bestimmten Winkelbereich in der horizontalen Ebene abdeckt.

**11.** Vorrichtung nach einem der Ansprüche 1 bis 8, **dadurch gekennzeichnet, dass** die Antenne aus vier ebenen Antennennetzwerken (211, 212, 213, 214) besteht, welche jeweils mindestens drei Teilnetzwerke (35, 36, 37, 38) beinhalten, wobei ein einziges Teilnetzwerk (37) eines jeden Netzwerks mit dem Empfänger (41) zu einem gegebenen Zeitpunkt verbunden ist, wobei die anderen Teilnetzwerke (36, 37, 38) nacheinander verbunden werden.

**12.** Vorrichtung nach einem der Ansprüche 1 bis 8, **dadurch gekennzeichnet, dass** die Antenne aus vier ebenen Antennennetzwerken (211, 212, 213, 214) besteht, welche jeweils mindestens drei Teilnetzwerke (35, 36, 37, 38) beinhalten, wobei nur die vier Teilnetzwerke (35, 36, 37, 38) desselben Antennenpaneels (214) mit dem Empfänger (41) zu einem gegebenen Zeitpunkt verbunden sind, wobei die Teilnetzwerke der anderen Paneele nacheinander mit dem Empfänger (41) verbunden werden.

**13.** Vorrichtung nach einem der vorhergehenden Ansprüche, **dadurch gekennzeichnet, dass** sie in der Lage ist, mit anderen Detektionsmitteln zusammenzuarbeiten, wobei die anderen Mittel Mittel vom Typ Radar und/oder vom Typ AIS sind.

**14.** Küstenüberwachungssystem, **dadurch gekennzeichnet, dass** es eine Vorrichtung nach einem der vorhergehenden Ansprüche beinhaltet.

**15.** System nach Anspruch 14, **dadurch gekennzeichnet, dass** es andere Detektionsmittel beinhaltet, wobei die anderen Mittel Mittel vom Typ Radar und/oder vom Typ AIS sind.

**16.** System nach Anspruch 15, **dadurch gekennzeichnet, dass** die Parameter der durch die Vorrichtung erkannten Signale mit den durch die anderen Mittel erhobenen Informationen zusammengeführt werden, um die Klassifizierung der Schiffe zu verbessern oder ihre Identifizierung sicherzustellen.

**17.** System nach Anspruch 16, **dadurch gekennzeichnet, dass** die erhobenen Informationen Informationen vom Typ "range profile" oder vom Typ ISAR-Bild sind.

**Claims**

**1.** Radar device which is capable of being fitted to a coastal surveillance system, **characterised in that** it comprises at least:

- one antenna (21) which operates in the polarisation of maritime navigation radars, that is to say, horizontal rectilinear polarisation, and which comprises at least three reception channels in the horizontal plane,
- for each channel, a receiver (22, 41) whose bandwidth is tunable in the frequency range of the maritime navigation radars;
- a processing unit (23) which simultaneously carries out a plurality of detections which are each adapted to a type of signal received,

the processing unit carrying out (63) a comparison of parameters of the radar signals detected with standardised parameters providing the definition of maritime navigation radars in order to derive therefrom the nature of the vessels which are provided with radars transmitting the signals.

**2.** Device according to claim 1, **characterised in that** the processing unit (23) simultaneously carries out a detection (62) which is adapted to pulsed radar signals and a detection which is adapted to low peak power radar signals and carrying out the angular localisation of the radars emitting the signals detected.

**3.** Device according to either of the preceding claims, **characterised in that** the detection of the radar signals is carried out in accordance with several successive frequency filtering stages which are mounted in a cascading manner, corresponding to the different possible frequency bands which are specific to the maritime navigation radars.

**4.** Device according to any one of the preceding claims, **characterised in that** the detection of the pulsed radar signals is carried out by means of quadratic detection (78, 79).

**5.** Device according to any one of the preceding claims, **characterised in that** the detection of low peak power radar signals is carried out by means of autocorrelation of the signals received on the same channel.

**6.** Device according to any one of the preceding claims, **characterised in that** the detection of the low peak power radar signals is carried out by means of intercorrelation of the signals received on different reception channels.

**7.** Device according to any one of the preceding claims, **characterised in that** the antenna (21) is a network antenna of the azimuth interferometric type.

**8.** Device according to claim 1, **characterised in that** the antenna (21) is a network antenna of the monopulse type.

**9.** Device according to any one of the preceding claims, **characterised in that** the antenna (23) is positioned on a vertical rotation axis (49) in order to cover by means of continuous rotation a specific angular range in the horizontal plane.

**10.** Device according to any one of claims 1 to 8, **characterised in that** the antenna (23) is positioned on a vertical rotation axis (49) in order to cover by means of successive fixed and alternating angular positions a predetermined angular range in the horizontal plane.

**11.** Device according to any one of claims 1 to 8, **characterised in that** the antenna is composed of four planar antenna networks (211, 212, 213, 214) which each comprise at least three sub-networks (35, 36, 37, 38), a single sub-network (37) of each network being connected to the receiver (41) at a specific time, the other sub-networks (36, 37, 38) being connected successively.

**12.** Device according to any one of claims 1 to 8, **characterised in that** the antenna is composed of four planar antenna networks (211, 212, 213, 214) which each comprise at least three sub-networks (35, 36, 37, 38), only the four sub-networks (35, 36, 37, 38) of the same antenna panel (214) being connected to the receiver (41) at a specific time, the sub-networks of the other panels being connected successively to the receiver (41).

**13.** Device according to any one of the preceding claims, **characterised in that** it is capable of cooperating with other detection means, the other means being of the radar type and/or AIS type.

**14.** Coastal surveillance system, **characterised in that** it comprises a device according to any one of the preceding claims.

**15.** System according to claim 14, **characterised in that** it comprises other detection means, the other means being of the radar type and/or AIS type.

**16.** System according to claim 15, **characterised in that** the parameters of the signals detected by the device are combined with information acquired by the other means in order to improve the classification of the vessels or to ensure the identification thereof.

**17.** System according to claim 16, **characterised in that** the information acquired is of the "range profile" type and/or ISAR image type.

FIG.1

FIG.3

```
┌─────────────────────────────────┐
│                                 │  21
│         Antenne réseau          │
│                                 │
└─────────────────────────────────┘
   │      │      │      │
 ┌────┐ ┌────┐ ┌────┐ ┌────┐
 │    │ │    │ │    │ │    │       22
 └────┘ └────┘ └────┘ └────┘
   │      │      │      │
┌─────────────────────────────────┐
│                                 │  23
│           Traitement            │
│                                 │
└─────────────────────────────────┘
```

## FIG.2

```
┌─────────────────────────────────┐
│                                 │  61
│      Séparation fréquentielle   │
│                                 │
└─────────────────────────────────┘
                │
         ┌──────────────┐
         │              │           62
         │   Détection  │
         │              │
         └──────────────┘
                │
┌─────────────────────────────────┐
│     Extraction des paramètres   │  63
│  discriminant des signaux détectés │
│                                 │
└─────────────────────────────────┘
```

## FIG.6

40

211

40

37

212

213

40

38

214

35

36

40

Récepteur quatre voies 41

FIG.4b

40

40

37

37

37

37

37

40

40

Récepteur quatre voies 41

FIG.4a

45  46  47  48

55
56  57  58

Récepteur quatre voies

49  41

FIG.5

FIG.7

70 Sortie de la voie antennaire i

80 Sortie de la voie antennaire j

71

72

73

78

79

Détection pulse dans le filtre d'étage m d'indice k

71

72

73

78

79

Mesure de la phase différentielle des sorties des filtres d'étage m et d'indice k

$\phi_{m,k}(i,j)$

FIG.8

EP 3 111 247 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030633695 A
- WO 2013141712 A1
- FR 1301719